# EUROPÄISCHE PATENTSCHRIFT

(11) **EP 2 873 471 B1**
(45) Veröffentlichungstag und Bekanntmachung des Hinweises auf die Patenterteilung: **11.04.2018**
(21) Anmeldenummer: 14184271.6
(22) Anmeldetag: 10.09.2014
(51) Int. Cl.: B21D 5/00, B21D 5/02, B23K 26/00, B23K 26/03, B23K 26/06, B23K 26/08, G06K 1/12

(54) **Verfahren und Laserbearbeitungsanlage zum Aufbringen einer unverlierbaren Kennzeichnen auf ein Werkstückes**
Method of and laser processing machine for providing an undestructible sign on a workpiece
Procédé et installation d'usinage laser pour réaliser un marquage indestructible sur une pièce

(30) Priorität: 10.09.2013 EP 13183743
(43) Veröffentlichungstag der Anmeldung: 20.05.2015
(73) Patentinhaber: Bystronic Laser AG, 3362 Niederönz (CH)
(72) Erfinder: Jost, Stefan, 4556 Aeschi SO (CH)
(74) Vertreter: Patentbüro Paul Rosenich AG

(56) Entgegenhaltungen:
- WO-A1-2013/052034
- US-A1- 2003 085 203
- US-A1- 2010 294 747
- US-B1- 6 681 055

## Beschreibung

Die Erfindung betrifft ein Verfahren zum Aufbringen einer unverlierbaren Kennzeichnung auf ein Werkstück, nach dem Oberbegriff des Anspruchs 1, sowie eine Laserbearbeitungsanlage, mit einer Laserbearbeitungseinheit zumindest zur Veränderung zumindest der Oberfläche des Werkstücks, nach dem Oberbegriff des Anspruchs 10.
Häufig werden in der Industrie Teile mit einem eindeutigen Ident Code beschriftet, damit diese identifiziert oder nachverfolgt werden können. Ebenfalls werden häufig Blechteile mit einer Lasergravur versehen, um diese zu kennzeichnen. In der US6681055A ist dazu ein Verfahren offenbart, bei dem ein zweidimensionaler Code durch einen Laser auf ein Werkstück aufgebracht wird, wobei jede Zelle des zweidimensionalen Musters aus einer Vielzahl von runden, lasergravierten Punkten besteht. Eine ähnliche Methode mit einander nicht überlappenden Punkten ist in der US6164552A beschrieben.
Eine Lasergravur kann mittels eines speziellen Graviergerätes mit Lasern mit einer Leistung kleiner 0,5 kW aufgebracht werden, was einen zusätzlichen Aufwand bei der Anschaffung als auch im Prozessablauf mit sich bringt. Ein derartiges Verfahren bzw. eine Lasermarkierungsanlage ist beispielsweise in der WO2013052034 (als nächstliegender Stand der Technik dieser Anmeldung) offenbart, gemäss welchem eine Steuerung der Laserleistung zur Erzielung einer gleichmässigen Markierungsqualität vorgenommen wird. Die Laserleistung beträgt dabei typischerweise etwa 2.5W und geht bis maximal 100W, was deutlich unter den Leistungen von Laserschneidanlagen liegt. Die Markierung wird hier durch das Abtragen einer von mehreren Lagen einer Beschichtung aufgebracht, die sich über einem Basismaterial befindet, das selbst nicht verändert wird. Der Prozess wird nach einer Kalibrierung gesteuert wird es werden dazu entsprechende Parametersätze geladen und ohne weitere Veränderung abgearbeitet. Dabei wird offenbar vorausberechnend davon ausgegangen, dass eine erwünschte Qualität erzielt und gehalten werden kann. Abweichungen können erst nach kompletter Fertigstellung der Markierung durch Augenschein festgestellt werden.

Daher wurde versucht, die Markierung direkt mit Laserschneidmaschinen mit Laserquellen mit Laserleistungen von grösser als 1 kW anzubringen, womit ein zusätzliches Graviergerät entfällt. Das Aufbringen eines Ident Codes mit dem Gravierprozess auf einer Laserschneidmaschine dauert bei aktuellen Verfahren sehr lange. Grund dafür ist die grosse Masse der Schneidbrücke, welche nur relative langsame Bewegungen erlaubt. Aufgrund der Massenbeschleunigung ergibt sich nur eine geringe Wiederholgenauigkeit der Verfahrbewegungen, was sich in einer meist schlechten Qualität der Codegravur auswirkt.

Derartige Verfahren und Einrichtungen sind beispielsweise weiters in der EP1123772A1, der WO2012121734A1, der EP0984844A1, der US20140002565A1 oder der US20120312792A1 offenbart. Diese Verfahren umfassen auch die Einstellung verschiedener Parameter der Laseranlage, wie beispielsweise bei gepulster Laserstrahlung u.a. der Pulsweite oder des Abstandes zwischen zwei Pulsen. Wie beispielsweise in der US20100033548A1 offenbart ist, kann über die Pulsdauer die Grau-Intensität des aufgebrachten Musters eingestellt werden. Auch in der WO2012121734A1 ist beschrieben, dass über eine geeignete Wahl von Werten für die Parameter der Laserpulse die Färbung und die Intensität der Markierung gesteuert werden kann.

Die Qualität der Gravur von Ident Codes mittels Laserschneidmaschinen ist mangelhaft und abhängig von den eingesetzten Standardparametern (u.a. Gasdruck, Gasgemische, Lasermodulation, Laserpuls und Laserfokus). Von handelsüblichen Ident Code Scannern können diese Gravuren nicht oder nur unzuverlässig gelesen werden.

Als weiteres Problem kommt hinzu, dass sich typische Laserquellen mit Leistungen jenseits von 1 kW im für das Gravieren genutzten Bereich kleiner 10% der Maximalleistung nicht mehr zuverlässig steuern lassen und die Leistung zu schwanken beginnt. Dadurch funktioniert die Gravur in unterschiedlichen Materialien nicht mehr prozesssicher. Auch ist der Laserspot auf der Materialoberfläche grösser als im Fokuspunkt im Inneren des Materials und reagiert auf Leistungsschwankungen mit Grössenveränderung, was zu unscharfen und ungleichmässigen Konturen führt.

Beim Gravieren mit durchgehenden Konturen (Linien) wird auf einer Laserschneidmaschine typischerweise im Bereich von 8-16 Pulsen/mm gearbeitet was jedoch bei kurzen, für Ident Codes typischen Konturen zu starken Differenzen in Qualität und Genauigkeit führt. Durch das Pulsen und die Verfahrgeschwindigkeit verschiebt sich die Gravur leicht in Fahrrichtung. Je schneller gefahren wird, desto grösser ist die Verschiebung, was eine Verzerrung der einzelnen gravierten Bereiche zur Folge hat.

Häufige und enge Richtungswechsel, was typisch für die Aufbringung von Ident Codes ist, verringern die Verfahrgeschwindigkeit und verlängern damit das Aufbringen des Codes.

Das Aufladen der Kondensatoren für die Laserpulserzeugung unterliegt einer Zeitabhängigkeit und verändert sich, d.h. die Leistung eines Pulses schwankt je nach Graviergeschwindigkeit und führt zu Qualitätseinbussen der Gravur bei Verwendung von gepulsten Lasern.

Erste Ansätze zur Qualitätsprüfung und Anpassung des Kennzeichnungsprozesses sind gemacht worden. So offenbart die JP2000114619A ein ausschliessliches Laserbeschriftungssystem für Glasprodukte, bei welchem mit einer CCD-Kamera die durch den Laser aufgebrachte Markierung nach deren Fertigstellung aufgenommen wird. In einem Bildprozessor werden dann Eigenschaften der Markierung selbst ermittelt, wie etwa deren Farbe, deren Linienbreite oder Punktgrösse, etc. Diese der Markierung selbst anhaftenden Eigenschaften werden in einem Regelkreis zum Regeln des Laserausganges verwendet. Damit kann die gleichbleibende Qualität der Lasermarkierung gewährleistet werden, indem auf der Grundlage des Verarbeitungsergebnisses des Bildes zum Beispiel die Korrelation der Linienbreite und der Laserausgangsleistung angepasst wird.

Die aufgebrachten Markierungen können neben beispielsweise einer Identifikationsfunktion im Produktionsfluss zur Qualitätskontrolle auch Informationen beinhalten, die den weiteren Produktionsfluss beeinflussen. So wird typischerweise im Rahmen eines Verfahrens zum Biegen eines Werkstückes dieses mit einem Code versehen, der für einen bestimmten Biegeprozess charakteristisch ist. Vorzugsweise ist dabei eine maschinenlesbare Kennzeichnung vorgesehen, um im Rahmen der Herstellung des Biegeteils das maschinenunterstützte Einlesen der Kennzeichnung, das vorzugsweise automatische Laden des der Kennzeichnung entsprechenden Biegeprozesses in die Steuerung der Biegemaschine und das anschliessende Biegen des Werkstücks gemäss dem geladenen Biegeprozess rasch und fehlerfrei zu ermöglichen. Meist wird an der Biegemaschine von einer aufgeklebten Etikette mit einem Handscanner diese Kennzeichnung eingelesen und wird das entsprechende Biegeprogramm aufgerufen.

Das Biegeteil wird meist durch ein 3D-File beschrieben, das durch ein im Prinzip beliebiges CAD System erzeugt wurde. Nach dem Einlesen dieser Daten in eine Steuerungssoftware für die Anlage zum Schneiden und Biegen (Schneid-/Biegeanlage) werden daraus in mehreren Schritten maschinenlesbare Produktions-Files erzeugt, insbesondere für die Biegemaschine, nachdem eine entsprechende Biegetechnologie zugewiesen wurde. Es werden oftmals auch zusätzliche Arbeitspapiere (u.a. Etiketten) ausgegeben, die eine Identifizierung der Teile an der Biegemaschine erleichtern.

Die oben beschriebene herkömmliche Prozesskette ist nicht durchgängig prozesssicher aufgebaut. So birgt die Identifikation der Teile mittels Etiketten oder Begleitpapieren die Gefahr von Vertauschungen oder Fehlkennzeichnungen in sich, sowohl beim Aufbringen von Etiketten an den zu biegenden Werkstücken oder auch beim Identifizieren anhand von Begleitpapieren an der Biegepresse.
Eine erste Aufgabe der vorliegenden Erfindung ist es daher, ein Verfahren und eine Vorrichtung zur wenig aufwendigen Aufbringung einer qualitativ hochwertigen Kennzeichnung auf ein Werkstück anzugeben, und dabei die oben genannten Nachteile der herkömmlichen Methoden zu vermeiden. Eine weitere Aufgabe der vorliegenden Erfindung ist es somit, das Verfahren sowie die Anlage zum Schneiden und Biegen von Werkstücken für einen prozesssicheren Ablauf zu gestalten und die Gefahr von Vertauschungen oder fehlerhafter Kennzeichnung von Werkstücken weitestgehend zu verringern, wobei das Verfahren und die Anlage vorzugsweise derart auszuführen sind, dass für den Benutzer ein vereinfachter Bedienungsablauf mit verschiedenen Stufen der Automatisierung zur Verfügung gestellt wird. Die Aufgabe wird durch die Merkmale der unabhängigen Ansprüche 1 und 10 gelöst. Vorteilhafte Weiterbildungen, insbesondere zur Lösung der weiteren Aufgabe, sind in den Figuren und in den abhängigen Patentansprüchen dargelegt. Ein Verfahren zum Aufbringen einer unverlierbaren Kennzeichnung auf ein Werkstück gemäß der Erfindung ist im Anspruch 1 definiert. Erfindungsgemäss wird der Laser gepulst mit einer Ausgangsleistung zwischen 10% und 60% der Maximalleistung betrieben, und zumindest einer der Parameter Leistung und Pulsdauer in Abhängigkeit von der ermittelten Qualität der Gravur in Echtzeit geregelt. Damit ist die Ident Code Gravur auch mit Lasern mit Laserleistung über 1 kW möglich, die dazu in einem noch zuverlässig steuerbaren Leistungsbereich betrieben werden, in dem eine stabile Leistungsabgabe gewährleistet ist. Durch die vorzugsweise kontinuierliche automatische Überprüfung der Qualität der Gravur während des Gravierprozesses können automatisch für die Gravur wesentliche Parameter angepasst bzw. korrigiert werden, um durch eine derartige Regelung die gleichbleibend hohe Qualität des aufgebrachten Ident Codes zu gewährleisten
Vorzugsweise wird das erfindungsgemässe Verfahren mit einer Laserleistung von mindestens 200W, vorzugsweise 400W bis 1200W, durchgeführt. Die Pulsweite beträgt dabei zwischen 200µs und 1000µs. Damit sind selbst hochenergetische Laserquellen in einem stabilen, gut regelbaren Energiebereich betreibbar und die einzelnen Elemente der Gravur sind rasch und mit vorzugsweise jeweils einem Laserpulse zu erzeugen.
Gemäss einer vorteilhaften Variante des Verfahrens wird als kennzeichnungskräftiges Muster ein vorzugsweise zweidimensionaler Array-Code aufgebracht, wobei gegebenenfalls jeder Matrixpunkt des Array-Codes aus mehreren Rasterpunkten aufgebaut wird. Besonders vorteilhaft dabei ist es, wenn der Laserstrahl entlang der Linien in einer ersten Dimension abwechselnd in entgegengesetztem Sinn und vorzugsweise mit konstanter Geschwindigkeit geführt wird, und der Abstand zwischen zwei aufeinanderfolgenden, in entgegengesetztem Sinn durchlaufenen Linien vorzugsweise der Hälfte der Abmessung des Musters, zumindest aber dem doppelten Linienabstand, entspricht.

Das Aufbringen eines Ident Code mit Rasterpunkten und im Scanning Mode führt zu einer markanten Zeitersparnis, insbesondere, da beim Aufbringen mit gleichbleibendem maximalem Wenderadius schneller verfahren werden kann und die einzelnen Rasterpunkte pro Modul in der gleichen Verfahrrichtung aufgebracht werden, was eine gleichbleibende Genauigkeit zur Folge hat.

Besonders vorteilhafte Parameter für die kontinuierliche Überwachung der Qualität der Gravur sind beispielsweise die Rückreflexionsintensität und/oder das Prozesslicht, der Kontrast, die Farbe, od. dgl.

Eine besonders vorteilhafte Variante des erfindungsgemässen Verfahrens sieht vor, dass aus einer Datenbank ein spezifischer Parametersatz für die Lasermaschine abhängig vom Material des Werkstücks ausgewählt und für das Kennzeichnen des Werkstücks in die Steuerung der Lasermaschine geladen wird.

Durch die Erstellung eines spezifischen Parametersatzes (u.a. Düsenabstand, Gasdruck, Gasgemische, Lasermodulation, Laserpuls und Laserfokus) für das Ident Code Gravieren konnte in den unterschiedlichsten Materialien ein prozesssicheres Verfahren gefunden werden. Für jede Materialart, Materialqualität und Dicke sind unterschiedliche Parametersätze erforderlich.

Durch die Veränderung des Gasdrucks in den unterschiedlichen Materialien können Rasterpunkte mit konstanter Grösse erzeugt werden. Die Dellen, d.h. Tiefe und Form eines Rasterpunkts, kann via Gasdruck so mitbeeinflusst werden, dass das flüssige Metall gleichmässig verdrängt wird und sich ein gleichmässiger Krater bildet.

Durch die Gasart oder das Gasgemisch kann die Farbe eines Rasterpunktes so beeinflusst werden, dass durch Oxidation ein optimaler Kontrast entsteht. Dies ist Voraussetzung für eine gute Lesbarkeit mittels Ident Code Scanners.

Durch Reduzierung der Pulsweite konnte die Qualität der Gravur markant verbessert werden. Die Puls Modulation wurde um den Faktor 10 verbessert von 1ms auf 100µs was dazu geführt hat, dass neu mit 60 Laserpulsen/mm gearbeitet werden kann.

Durch Veränderung des Fokuspunktes, neu auf oder über dem Material, erfolgt die Gravur viel gleichmässiger und ist weniger Leistungsabhängig da die Leistung abnimmt je tiefer der Laserstrahl in das Material eindringt. Weiter konnte die Gravur optimiert werden durch Anpassung der Fokusgrösse in Abhängigkeit vom Gravierpunkt, respektive der Ident Code Grösse.

Zur Lösung der weiteren Aufgabe der Erfindung ist ein Verfahren zur Bearbeitung eines Werkstücks mittels eines Laserstrahls vorgesehen, vorzugsweise zum Laserschneiden des Werkstücks, allenfalls gefolgt von weiteren Verarbeitungsschritten wie beispielsweise dem Biegen des Werkstückes.

Dieses Verfahren ist erfindungsgemäss dadurch gekennzeichnet, dass spätestens vor dem ersten weiteren Verarbeitungsschritt nach der Bearbeitung des Werkstücks mittels des Laserstrahls eine unverlierbaren Kennzeichnung auf das Werkstück durch Veränderung zumindest der Oberfläche des Werkstücks entsprechend den Merkmalen der obigen Absätze aufgebracht wird.

Vorzugsweise wird dabei die Kennzeichnung derart erstellt, dass sie einen Anteil enthält, der zumindest einen Parameter eines auf die Laserbearbeitung folgenden Verarbeitungsschrittes charakterisiert.

Von besonderem Vorteil ist dabei eine Variante, gemäss welcher eine einen bestimmten Biegeprozess codierende maschinenlesbare Kennzeichnung aufgebracht und vorzugsweise maschinenunterstützt eingelesen wird, worauf in Abhängigkeit von der Kennzeichnung ein bestimmter Biegeprozesses abgearbeitet wird.

Bevorzugt enthält der Bearbeitungsplan der Bearbeitung mittels des Laserstrahls einen Teilabschnitt für das Aufbringen der Kennzeichnung.

Eine Laserbearbeitungsanlage gemäß der Erfindung ist im Anspruch 10 definiert. Die Steuereinheit ist derart ausgelegt, um die Ausgangsleistung für das Gravieren des Musters auf 10% bis 60% der Maximalleistung zu reduzieren und zumindest einen der Parameter Leistung und Pulsdauer in Echtzeit derart zu regeln, dass der charakterisierende Wert im Wesentlichen konstant bleibt. Dies gilt insbesondere für Laserschneidanlagen mit einer Laserbearbeitungseinheit mit Laser-Ausgangsleistungen von mehr als 1 kW.
Bevorzugt ist dabei, wenn die Steuereinheit derart ausgelegt ist, um die Ausgangsleistung auf zwischen 200W und 1200W zu reduzieren, wobei die Pulsweite zwischen 200µs und 1000µs beträgt.
Gemäss einer vorteilhaften Ausführungsform der Erfindung ist die Anlage weiters dadurch gekennzeichnet, dass die Steuereinheit zur Bewegungssteuerung des Laserstrahls zumindest für das Aufbringen der Kennzeichnung derart ausgelegt ist, dass als kennzeichnungskräftiges Muster ein vorzugsweise zweidimensionaler Array-Code aufgebracht wird, wobei gegebenenfalls jeder Matrixpunkt des Array-Codes aus mehreren Rasterpunkten aufgebaut wird, und der Laserstrahl entlang der Linien in einer ersten Dimension abwechselnd in entgegengesetztem Sinn und vorzugsweise mit konstanter Geschwindigkeit geführt wird, und der Abstand zwischen zwei aufeinanderfolgenden, in entgegengesetztem Sinn durchlaufenen Linien vorzugsweise der Hälfte der Abmessung des Musters, zumindest aber dem doppelten Linienabstand, entspricht.

Um für unterschiedliche Materialien ein prozesssicheres Kennzeichnen zu ermöglichen, ist die erfindungsgemässe Anlage gekennzeichnet durch eine Datenbank mit spezifischen, materialabhängigen Parametersätzen und eine Schnittstelle zum Laden jeweils eines speziellen Parametersatzes in die Steuereinheit der Lasermaschine.

Für eine vorzugsweise kontinuierliche Prüfung der Qualität der aufgebrachten Markierung und die Möglichkeit der Regelung der Lasermaschine zur Gewährleistung einer gleichbleibenden hohen Qualität der Gravur ist als weiteres optionales Merkmal zumindest eine Anordnung zur Ermittlung der Rückreflexionsintensität, des Prozesslichtes, des Kontrasts, der Farbe, od. dgl. während der Aufbringung des Musters vorgesehen. Diese ist zur Generierung eines die Qualität der Gravur charakterisierenden Wertes und zu dessen Rückführung in die Steuereinrichtung der Lasermaschine ausgelegt. Prozesslicht, d.h. aufgrund der Wechselwirkung zwischen Laserstrahl und Material emittiertes Licht, ist ebenfalls sehr geeignet zur Qualitätsprüfung bzw. um das Gravieren zu regeln. Prozesslicht ist im Wesentlichen Wärmestrahlung und kann mit einer einfachen Fotodiode detektiert werden.

Um die automatisiert Weiterverarbeitung des gekennzeichneten Werkstücks zu ermöglichen, ist die erfindungsgemässe Anlage weiters gekennzeichnet durch eine Einheit, die ein kennzeichnungskräftiges Muster generiert oder abruft, welches zumindest einen Parameter für eine Anlage zur weiteren Bearbeitung des Werkstücks nach der Laserbearbeitung charakterisiert. Vorzugsweise ist dies ein kennzeichnungskräftiges und vorzugsweise maschinenunterstützt einlesbares Muster, um die vollautomatische Handhabung und Bearbeitung zu ermöglichen.

Im Rahmen der Erfindung liegt auch ein Computerprogrammprodukt mit Anweisungen zum Versehen eines Werkstückes mit einer unverlierbaren Kennzeichnung, wobei die Anweisungen bei Ausführung durch einen Prozessor einer Steuereinrichtung einer Laserbearbeitungsanlage zur Ausführung des oben beschriebenen Verfahrens ausgelegt sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile.

Es zeigen dabei:
- Fig. 1: ein Beispiel für den Aufbau eines aus Rasterpunkten zusammengesetzten Data Matrix Codes als Beispiel für eine unverlierbare, durch Lasergravur aufbringbare Kennzeichnung,
- Fig. 2: eine schematische Darstellung des Scanning Mode bei Aufbringung eines aus Rasterpunkten zusammengesetzten Ident Codes mittels eines Laserschneidkopfes als Beispiel für eine Laserbearbeitungseinrichtung,
- Fig. 3: eine Darstellung eines kompletten Data Matrix Codes, der aus jeweils vier Rasterpunkten pro Modul des Codes aufgebaut ist, mit Eintragung der bevorzugten Verfahrbewegungen (oberer Bereich) der Laserbearbeitungseinrichtung im Scanning Mode gegenüber einer ebenfalls möglichen Verfahrbewegung (unterer Bereich),
- Fig. 4: eine schematische Darstellung zur dynamischen Parameteranpassung während der Aufbringung der Kennzeichnung,
- Fig. 5: ein Diagramm mit dem Signalverlauf der Ruckreflexions-Pulse für zwei Laserpulse beim Gravieren jeweils eines Rasterpunktes des Ident Code,
- Fig. 6: schematisch einen erfindungsgemässen Verfahrensablauf für die Erkennung, Kennzeichnung und Identifikation an einer Biegepresse eines herzustellenden Biegeteils,
- Fig. 7: einen Ausschnitt aus einem Schneidplan mit mehreren zuzuschneidenden Teilen mit jeweils einem Platzhalter für eine Kennzeichnung, und
- Fig. 8: eine Draufsicht auf ein Kennzeichnung.

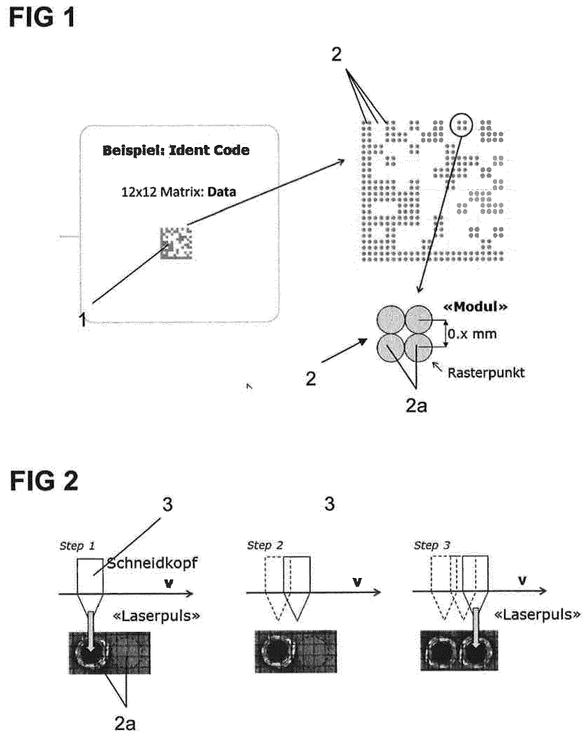

Wie in Fig. 1 zu erkennen ist, besteht ein Ident Code 1 üblicherweise aus einzelnen Symbol-Elementen oder Modulen 2, welche auf die Oberfläche des Werkstücks aufgebracht werden und schliesslich zum Beispiel einen Data Matrix Code ergeben. Die einzelnen Module 2 des Data Matrix Codes bestehen aus Rasterpunkten 2a, meist Quadraten oder ausgefüllten Kreisen, die zwei unterscheidbare Intensitäten aufweisen. Im dargestellten Beispiel ist eine dieser Intensitäten durch keine Veränderung der Oberfläche des Werkstücks, d.h. durch seine ursprüngliche Reflexionseigenschaft, bestimmt, während die andere Gruppe von Modulen durch eine dazu unterschiedliche Oberflächenbeschaffenheit definiert ist, die durch Laserbearbeitung der Oberfläche erhalten wird. Beim Aufbringen des Codes 1 mit beispielsweise einer Laserschneidmaschine muss die Kontur jedes einzelnen Moduls 2 "abgefahren" werden.

Dies geschieht vorteilhafterweise im Scanning Mode, der schematisch in Fig. 2 dargestellt ist und die bislang typischen häufigen Richtungswechsel vermeidet, die durch ihre Beschleunigungs- und Abbremsprozesse viel Zeit in Anspruch nehmen. Im Scanning Mode wird beispielsweise ein Laserschneidkopf 3 einer Laserschneidmaschine vorzugsweise ohne Stillstand und sehr schnell über das Werkstück geführt. Dabei wird an jenen Stellen, an welchen ein Rasterpunkt 2a mit gegenüber der unveränderten Werkstücksoberfläche geänderter Intensität vorhanden sein soll, ein Laserpuls ausgelöst und damit eine Gravur in der Oberfläche des Werkstücks hervorgerufen.

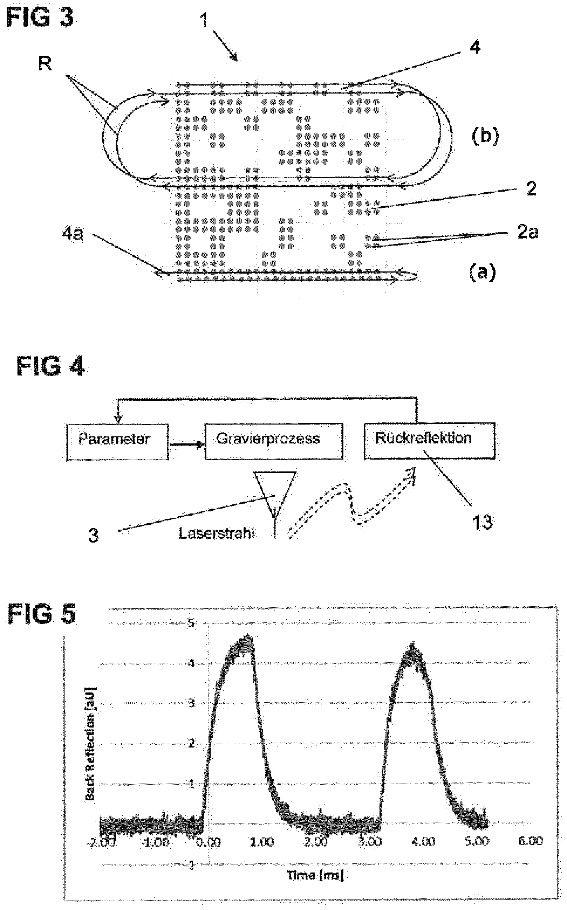

Wie in Fig. 3 dargestellt ist, wird der Laserschneidkopf 3 vorzugsweise entlang einer Bahn 4 geführt, die aus geraden und zueinander parallelen Abschnitten besteht. Zwischen zwei nacheinander durchfahrenen geraden Abschnitten durchläuft der Laserschneidkopf 3 einen Halbkreis ausserhalb des eigentlichen Code-Bereiches. Vorzugsweise liegen die nacheinander durchfahrenen geraden Abschnitte derart voneinander beabstandet, dass sich ein gleichbleibender maximaler Wenderadius R ergibt, dessen Grösse einem Viertel der Abmessung des Codes 1 senkrecht zu den geraden Bahnabschnitten entspricht (siehe oberer Bereich der Fig. 3). Beim Aufbringen des Codes 1 mit gleichbleibendem maximalem Wenderadius R kann der Laserschneidkopf 3 schneller verfahren werden und die einzelnen Rasterpunkte 2a pro Modul 2 werden in der gleichen Verfahrrichtung aufgebracht, was eine gleichbleibend hohe Genauigkeit zur Folge hat.

Wenngleich nicht vorteilhaft ist auch eine Bahn 4a möglich, deren gerade Abschnitte unmittelbar benachbart liegen und der Wenderadius der Hälfte des Abstandes zwischen den geraden Bahnabschnitten entspricht (siehe unterer Bereich der Fig. 3).

Für die hohe Qualität der Kennzeichnung von Werkstücken unterschiedlicher Materialien konnte durch Erstellung von materialspezifischen Parametersätzen (u.a. Düsenabstand, Gasdruck, Gasgemische, Lasermodulation, Laserpuls und Laserfokus) speziell für das Ident Code Gravieren ein prozesssicheres Verfahren gefunden werden. Für jede Materialart, Materialqualität und Dicke sind unterschiedliche Parametersätze erforderlich, die sich auch von jenen Parametersätzen für das Laserschneiden der Materialien unterscheiden.

Durch die Veränderung des Gasdrucks können selbst bei unterschiedlichen Materialien Rasterpunkte 2a mit konstanter Grösse erzeugt werden. Die einen Rasterpunkt 2a bildenden Dellen können so betreffend Tiefe und Form über den Gasdruck mit beeinflusst werden, der das flüssige Metall jeweils gleichmässig verdrängt und sich so ein gleichmässiger Krater bildet. Durch die Gasart oder das Gasgemisch kann die Farbe eines Rasterpunktes so beeinflusst werden, dass durch Oxidation ein optimaler Kontrast entsteht. Dies ist Voraussetzung für eine gute Lesbarkeit mittels Ident Code Scanners. Durch Reduzierung der Pulsweite konnte die Qualität der Gravur markant verbessert werden. Die Puls Modulation wurde um den Faktor 10 verbessert von 1ms auf 100µs, was dazu geführt hat, dass neu mit 60 Laserpulsen/mm gearbeitet werden kann. Durch Veränderung des Fokuspunktes, neu auf oder über dem Material, erfolgt die Gravur viel gleichmässiger und ist weniger leistungsabhängig, da die Leistung abnimmt je tiefer der Laserstrahl in das Material eindringt. Weiter konnte die Gravur optimiert werden durch Anpassung der Fokusgrösse in Abhängigkeit vom Gravierpunkt, respektive der Ident Code Grösse.

Besonders wesentlich für die hohe Qualität und gute automatische Lesbarkeit der aufgebrachten Kennzeichnung ist die gleichbleibende Intensität der Rasterpunkte 2a bzw. zumindest der einzelnen Module 2. Wie in Fig. 4 schematisch anhand des Parameters der Rückreflexionen währen des Gravierens des Codes 1 erläutert wird, kann durch Rückführung eines die Qualität der Gravur kennzeichnenden Parameters in die Steuerung des Laserschneidkopfes 3 ein Regelkreis aufgebaut werden. Durch Messung beispielsweise der Rückreflexionen, des Kontrastes, der Farbe, od. dgl. vorzugsweise kontinuierlich während des Gravierprozesses können Schlüsse auf die Qualität der Gravur gezogen und es mittels Parameterbeeinflussung korrigierend eingegriffen werden, d.h. es ist eine Regelung des Gravierprozesses möglich. Prozesslicht, d.h. aufgrund der Wechselwirkung zwischen Laserstrahl und Material emittiertes Licht, vzw. im Infrarotbereich, ist ebenfalls sehr geeignet zur Qualitätsprüfung bzw. um das Gravieren zu regeln.

Das Diagramm der Fig. 5 zeigt gemessene Rückreflexe beim Gravieren von Kupfer. Die Laserleistung betrug dabei 550 W und die Pulslänge war 1ms. Wie die Fig. 5 nachweist, war das Feedback-Signal sehr gut erkennbar und somit kann auf diese Grösse gut geregelt werden. Einfache Regelungen können auf z.B. den Maximalwert des Rückreflexions-Signals abgestellt sein, während ausgeklügeltere Regelungsvarianten auf den Energieinhalt der Rückreflexions-Pulse (d.h. die Fläche unterhalb des Signalverlaufs jeweils eines Pulses) regeln.

Die Parametersätze können durch diese Regelmechanismen dynamisch und vorzugsweise in Echtzeit zum Zeitpunkt des Prozesses angepasst werden.

Auch durch Verknüpfung der Graviergeschwindigkeit mit der Kondensatorladezeit für die Laserpulserzeugung kann die Leistung eines Laserpulses beeinflusst und im Falle der Gravur stabilisiert und gleich gehalten werden.

In der obigen Beschreibung ist für das Gravieren des Ident Codes 1 die Verwendung einer Laserschneidmaschine 5 vorausgesetzt worden. Diese ist typischerweise ausgelegt, um mittels Laserschneiden Teile aus Material (meist Metallbleche) und dreidimensionale Körper (z. B. Rohre oder Profile) zu schneiden. Die Maschine kann - wie nachfolgend erläutert wird - aber auch dazu verwendet werden, um ein Werkstück 6 mit einer unverlierbaren Kennzeichnung 1 zu versehen.

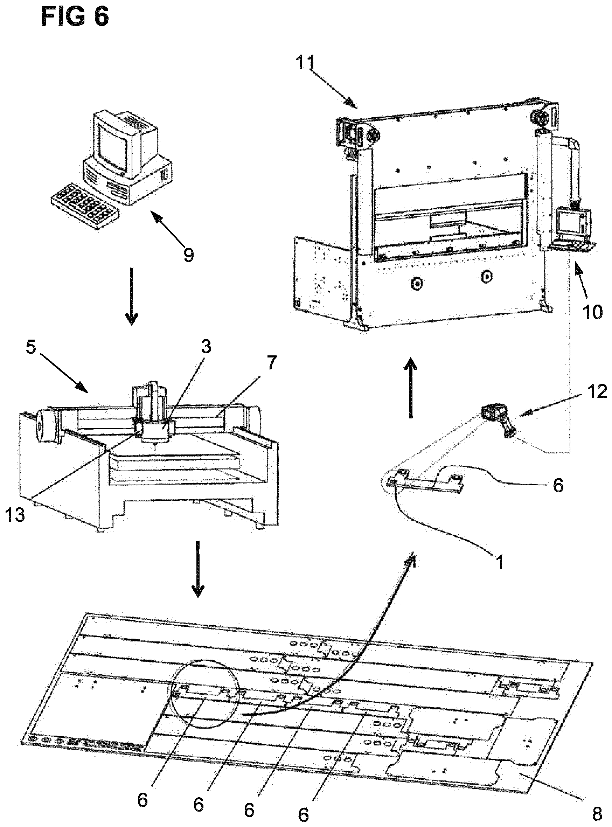

Die Laserleistung zum Durchtrennen des Materials liegt je nach Materialtyp und -dicke typischerweise im Kilowatt Bereich, zwischen 500W bis zu 6kW und mehr. Der Schneidkopf 3 und damit der bearbeitende Laserstrahl wird mit einer relativ schweren Konstruktion, beispielsweise einer Brücke 7, über grössere Distanzen (einige Zentimeter bis Meter) bewegt, um Teile aus einem Rohling 8 auf Basis eines Schneidplans auszuschneiden (siehe dazu Fig. 6). Der Laserstrahl ist auf eine kleine Fläche fokussiert, um möglichst viel Energie an einem Punkt zu bündeln. Gesteuert wird die Lasermaschine 5 über eine Steuereinrichtung 9, beispielsweise einem in der Lasermaschine 5 integrierten oder auch externen Rechner, auf welchem vorzugsweise auch der Schneidplan erstellt wird, auf welchem der Ident Code 1 generiert wird und auf welchem in einem Speicherbereich die Parametersätze für die unterschiedlichen Materialien abgelegt sind.

Für das Aufbringen des Ident Codes 1 wird die Laserleistung reduziert und mit Leistungen von 60% bis minimal 10% der Maximalleistung der Lasermaschine 5 gearbeitet. Beim Gravieren wird mit also mit "kleiner" Laserleistung zwischen ca. 200W und vorzugsweise 800W (in Sonderfällen und bei Laserquellen ab 3 kW Leistung allenfalls bis zu 1200W) Material des Werkstücks 6 verdampft oder abgetragen und damit die Rasterpunkte 2a des Ident Codes 1 auf das Material aufgebracht. Diese nehmen einen begrenzten Bereich von einigen Millimetern bis zu einigen Zentimetern ein.

In der nachfolgenden Tabelle sind für zwei konkrete Laserquellen, einem Faserlaser mit 3kW Maximalleistung und einem CO2-Laser mit maximal 4.4 kW Leistung die erfindungsgemäss für das Aufbringen des Ident Codes 1 verwendeten Wertepaare von verminderter Laserleistung und Pulsweite für drei Materialien beispielhaft angegeben.

| **Material** | Mild steel | Stainless steel | Aluminum |
|---|---|---|---|
| Material designation | 1.033 | 1.4301 | 3.3535 |
| Thickness | 1 to 3mm | 1 to 3mm | 1 to 3mm |

| **Fiber 3kW** | | | |
|---|---|---|---|
| **Cutting parameters, General** | | | |
| Laser power, cutting [W] | 800 | 400 | 550 |
| Cutting pressure, Gas type 1 [bar] | 3 | 3 | 1 |
| Cutting pressure, Gas type 2 [bar] | 3 | 3 | 3 |
| Cutting pressure, Gas type 3 [bar] | 6 | 6 | 6 |
| Pulse frequency, cutting [Hz] | 500 | 500 | 500 |
| Pulse width, cutting [us] | 300 | 200 | 500 |
| | | | |

| **CO2 Laser 3300/4400** | | | |
|---|---|---|---|
| **Cutting parameters, General** | | | |
| Laser power, cutting [W] | 400 | 450 | 1200 |
| Cutting pressure, Gas type 1 [bar] | 0.5 | 0.5 | 0.5 |
| Cutting pressure, Gas type 2 [bar] | 0.5 | 0.5 | 0.5 |
| Cutting pressure, Gas type 3 [bar] | 6 | 6 | 6 |
| Pulse frequency, cutting [Hz] | 500 | 500 | 500 |
| Pulse width, cutting [us] | 700 | 400 | 1000 |

In der nachfolgenden Beschreibung soll unter Bezugnahme auf Fig. 6 die Einbindung der bislang erläuterten Ident Code Kennzeichnung eines Werkstücks 6 in einer Prozesskette mit mehreren Bearbeitungsstufen beschrieben werden.

Am Beginn der in Fig. 6 dargestellten Prozesskette Schneiden-Biegen steht typischerweise ein 3D-File, welches durch ein beliebiges CAD-System erzeugt werden kann und welches das Biegeteil elektronisch beschreibt.

Dieses 3D-File wird in eine Software eingelesen, welche zur Erstellung von Schneidplänen sowie Biegeprogrammen ausgelegt ist und überdies die Fertigungsprozesse planen und überwachen kann. Diese Software kann in einer der Steuerungen 9, 10 der Anlage 5 zum Schneiden oder der Anlage 11 zum Biegen integriert sein, kann aber auch auf einem separaten Rechner laufen. Auch die Wahl der zum Biegeteil passenden Schneidtechnologien und Biegeprozesse können gegebenenfalls simuliert und kontrolliert werden. Vorzugsweise werden in dieser Software zwei maschinenlesbare Produktions-Files erzeugt, einerseits für die Schneidmaschine (NCP-File), z. B. Lasermaschine 5, und andererseits für die Biegemaschine 11.

Um die Prozesskette Schneiden-Biegen durchgängig prozesssicher gestalten zu können, d. h. die fehleranfällige Identifikation der Werkstücke 6 von Hand mittels Etiketten oder Begleitpapieren zu vermeiden, werden die Werkstücke 6 im Rahmen des Schneidevorgangs gleich mittels der oben erläuterten Lasergravur mit einer unverlierbaren Kennzeichnung 1 versehen, wobei vorzugsweise über eine Software ein beliebiger Text ebenfalls in das maschinenlesbare Produktions-File verpackt und damit im Zuge der Laserbearbeitung von der Lasermaschine 5 auf das Werkstück 6 aufgebracht wird. Typischerweise ist der Teilabschnitt der Bearbeitung des Werkstücks 6 zur Gravur der Rasterpunkte 2a in den Schneidplan integriert.

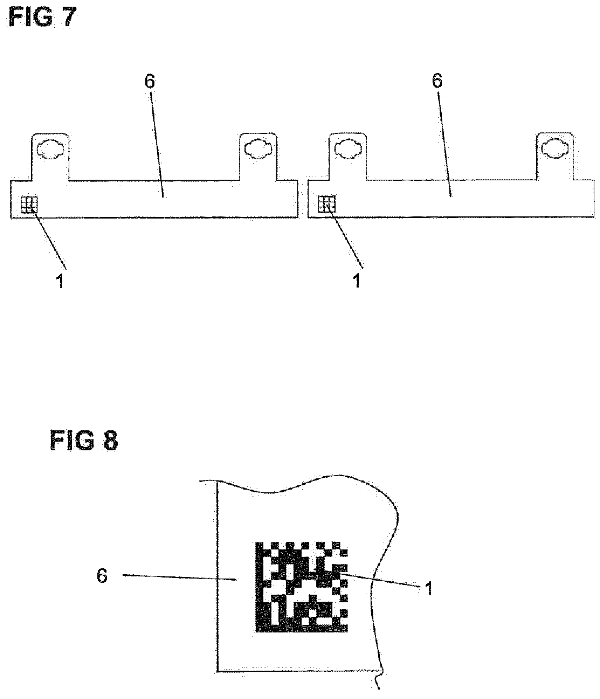

Vor oder während des Transportes des geschnittenen und codierten Werkstücks 6 (siehe Fig. 7) zur und in die Biegepresse 11 wird die unmittelbar auf dem Werkstück 6 unverlierbar und unveränderbar aufgebrachte Kennzeichnung 1 (siehe Fig. 8) abgelesen. Beispielsweise kann dazu ein vorzugsweise drahtloser Handscanner 12 eingesetzt werden oder auch ein stationärer Scanner am Eingang der Biegemaschine 11. Alternativ kann der Scanner aber auch eine Anzeigeeinrichtung für die abgelesene Kennzeichnung 4 aufweisen, die dann über andere Bedienelemente, beispielsweise eine Tastatur oder fest programmierte Tasten, bspw. von einem Maschinenbediener eingegeben wird. Die angelieferten Teile bzw. Werkstücke 6 können damit eindeutig identifiziert werden, und es kann das für diese Werkstücke 6 vorgesehene und passende Biegeprogramm aufgerufen oder geladen werden, um damit die 3D-Biegeteile fertigzustellen. Dabei wird eine Auswahl aus den vorab erstellten Produktions-Files für die Biegemaschine 11 oder aus einer Datenbank mit unterschiedlichen Biegeprogrammen getroffen.

Alle Vorgänge in der Schneidmaschine 5 als auch in der Biegemaschine 11 sowie alle Schritte von der Generierung bis zur Aufbringung des Ident Code 1 können auch in Form eines in die jeweilige Steuerung geladenen Computerprogrammproduktes vorliegen.

Durch das Einlesen der Kennzeichnung 1 direkt vom Werkstück 6 und den Aufruf des dadurch kodierten Biegeprogramms steht dieses automatisch und korrekt zugeordnet für den anschliessenden Biegeprozess bereit. Die Prozesskette ist somit durchgängig prozesssicher aufgebaut.

Selbstverständlich ist die Aufbringung einer unverlierbaren und allenfalls auch einen nachfolgenden Produktionsprozess charakterisierenden Kennzeichnung 1 nicht auf Werkstücke 6 eingeschränkt, die erst im Rahmen des Produktionsprozesses zugeschnitten werden. Auch zugelieferte Werkstücke 6 aus anderen Quellen können durch die oben beschriebenen Abläufe mit einer unverlierbaren Kennzeichnung 1 versehen werden und allenfalls wie zuletzt erläutert in weitere Schritte des Produktionsprozesses eingegliedert werden.

Die aufgebrachte Kennzeichnung 1 kann auch für beliebige andere Produktprozesse genutzt werden und bietet dabei in jedem Fall die Vorteile der Rückverfolgbarkeit des Werkstücks 6 bis hin zur Erstellung der Produktions-Files, des Up-/Downstream Trackings und einer Verbesserung des CRM (Customer-Relationship-Management).

### Bezugszeichenliste

- 1: Ident Code
- 2: Modul des Ident Code
- 2a: Rasterpunkt des Ident Code
- 3: Laserschneidkopf
- 4: Optimale Bahn des Laserschneidkopfes bei Aufbringen des Ident Code
- 4a: Alternative Bahn des Laserschneidkopfes bei Aufbringen des Ident Code
- 5: Lasermaschine
- 6: Werkstück
- 7: Brücke der Lasermaschine
- 8: Rohling für Werkstücke
- 9: Steuereinrichtung für Lasermaschine
- 10: Steuereinrichtung für Biegemaschine
- 11: Biegemaschine
- 12: Handscanner
- R: Optimaler Wenderadius

## Patentansprüche

1. Verfahren zum Aufbringen einer unverlierbaren Kennzeichnung (1) auf ein Werkstück (6) durch Veränderung zumindest der Oberfläche des Werkstücks (6), wobei ein gepulster Laserstrahl ein Muster in die Oberfläche des Werkstücks (6) eingraviert, automatisch zumindest ein die Qualität der Gravur charakterisierender Wert bestimmt und zumindest ein Parameter der Laserbearbeitung in Abhängigkeit von der ermittelten Qualität verändert wird, um den charakterisierenden Wert im Wesentlichen konstant zu halten, **dadurch gekennzeichnet, dass** der Laser gepulst mit einer Ausgangsleistung zwischen 10% und 60% der Maximalleistung betrieben wird, **und dass** zumindest einer der Parameter Leistung und Pulsdauer in Abhängigkeit von der ermittelten Qualität der Gravur in Echtzeit geregelt wird.

2. Verfahren nach Anspruch 1, **dadurch gekennzeichnet, dass** die Laserleistung mindestens 200W, vorzugsweise 400W bis 1200W, und die Pulsweite zwischen 200µs und 1000µs beträgt.

3. Verfahren nach Anspruch 1 oder 2, **dadurch gekennzeichnet, dass** als kennzeichnungskräftiges Muster (1) ein vorzugsweise zweidimensionaler Array-Code aufgebracht wird, wobei gegebenenfalls jeder Matrixpunkt (2) des Array-Codes aus mehreren Rasterpunkten (2a) aufgebaut wird, und der Laserstrahl entlang der Linien in einer ersten Dimension abwechselnd in entgegengesetztem Sinn und vorzugsweise mit konstanter Geschwindigkeit geführt wird, und der Abstand zwischen zwei aufeinanderfolgenden, in entgegengesetztem Sinn durchlaufenen Linien vorzugsweise der Hälfte der Abmessung des Musters (1), zumindest aber dem doppelten Linienabstand, entspricht.

4. Verfahren nach einem der Ansprüche 1 bis 3, **dadurch gekennzeichnet, dass** als charakteristischer Wert beispielsweise die Rückreflexionsintensität, das Prozesslicht, der Kontrast, die Farbe, od. dgl. ermittelt wird.

5. Verfahren nach einem der Ansprüche 1 bis 4, **dadurch gekennzeichnet, dass** aus einer Datenbank ein spezifischer Parametersatz für die Lasermaschine (5) abhängig vom Material des Werkstücks (6) ausgewählt und für das Kennzeichnen des Werkstücks (6) in die Steuerung (9) der Lasermaschine (5) geladen wird.

6. Verfahren zur Bearbeitung eines Werkstücks (6) mittels eines Laserstrahls, vorzugsweise zum Laserschneiden des Werkstücks (6), allenfalls gefolgt von weiteren Verarbeitungsschritten wie beispielsweise dem Biegen des Werkstückes (6), **dadurch gekennzeichnet, dass** spätestens vor dem ersten weiteren Verarbeitungsschritt nach der Bearbeitung des Werkstücks (6) mittels des Laserstrahls eine unverlierbaren Kennzeichnung (1) auf das Werkstück (6) durch Veränderung zumindest der Oberfläche des Werkstücks (6) entsprechend den Merkmalen der Ansprüche 1 bis 5 aufgebracht wird.

7. Verfahren nach Anspruch 6, **dadurch gekennzeichnet, dass** die Kennzeichnung (1) derart erstellt wird, dass sie einen Anteil enthält, der zumindest einen Parameter eines auf die Laserbearbeitung folgenden Verarbeitungsschrittes charakterisiert.

8. Verfahren nach Anspruch 7, **dadurch gekennzeichnet, dass** eine einen bestimmten Biegeprozess codierende maschinenlesbare Kennzeichnung (1) aufgebracht und vorzugsweise maschinenunterstützt eingelesen wird, worauf in Abhängigkeit von der Kennzeichnung (1) ein bestimmter Biegeprozesses abgearbeitet wird.

9. Verfahren nach Anspruch 8. **dadurch gekennzeichnet, dass** der Bearbeitungsplan der Bearbeitung mittels des Laserstrahls einen Teilabschnitt für das Aufbringen der Kennzeichnung (1) enthält.

10. Laserbearbeitungsanlage, mit einer Laserbearbeitungseinheit (3) zumindest zur Veränderung zumindest der Oberfläche des Werkstücks (6), insbesondere zum Aufbringen einer unverlierbaren Kennzeichnung (1) auf ein Werkstück (6), und mit einer Steuereinheit (9) für die Laserbearbeitungseinheit (5) zur Leistungs- und Bewegungssteuerung eines vorzugsweise gepulsten Laserstrahls zumindest für die Gravur eines Musters (1) in die Oberfläche des Werkstücks (6), sowie mit einer Anordnung (13) zur Ermittlung eines die Qualität der Gravur charakterisierenden Wertes, **dadurch gekennzeichnet, dass** die Steuereinheit (9) derart ausgelegt ist, um die Ausgangsleistung für das Gravieren des Musters (1) auf 10% bis 60% der Maximalleistung zu reduzieren und zumindest einen der Parameter Leistung und Pulsdauer in Echtzeit derart zu regeln, dass der charakterisierende Wert im Wesentlichen konstant bleibt.

11. Anlage nach Anspruch 10, **dadurch gekennzeichnet, dass** die Steuereinheit (9) derart ausgelegt ist, um die Ausgangsleistung auf mindestens 200W, vorzugsweise 400W bis 1200W, zu reduzieren und die Pulsweite zwischen 200µs und 1000µs einzustellen.

12. Anlage nach Anspruch 10 oder 11, **dadurch gekennzeichnet, dass** die Steuereinheit (9) zur Bewegungssteuerung des Laserstrahls zumindest für das Aufbringen der Kennzeichnung (1) derart ausgelegt ist, dass als kennzeichnungskräftiges Muster ein vorzugsweise zweidimensionaler Array-Code aufgebracht wird, wobei gegebenenfalls jeder Matrixpunkt (2) des Array-Codes aus mehreren Rasterpunkten (2a) aufgebaut wird, und der Laserstrahl entlang der Linien in einer ersten Dimension abwechselnd in entgegengesetztem Sinn und vorzugsweise mit konstanter Geschwindigkeit geführt wird, und der Abstand zwischen zwei aufeinanderfolgenden, in entgegengesetztem Sinn durchlaufenen Linien vorzugsweise der Hälfte der Abmessung des Musters (1), zumindest aber dem doppelten Linienabstand, entspricht.

13. Anlage nach einem der Ansprüche 10 bis 12, **gekennzeichnet durch** eine Datenbank mit spezifischen, materialabhängigen Parametersätzen und eine Schnittstelle zum Laden jeweils eines speziellen Parametersatzes in die Steuereinheit (9) der Lasermaschine (5).

14. Anlage nach einem der Ansprüche 10 bis 13, **gekennzeichnet durch** zumindest eine Anordnung (13) zur Ermittlung der Rückreflexionsintensität, des Prozesslichtes, des Kontrasts, der Farbe, od. dgl. während der Aufbringung des Musters (1) und der Generierung eines die Qualität der Gravur charakterisierenden Wertes zur Rückführung in die Steuereinrichtung (9) der Lasermaschine (5),

15. Anlage nach einem der Ansprüche 10 bis 14, **gekennzeichnet durch** eine Einheit, die ein kennzeichnungskräftiges Muster (1) generiert oder abruft, welches zumindest einen Parameter für eine Anlage (11) zur weiteren Bearbeitung des Werkstücks (6) nach der Laserbearbeitung charakterisiert, vorzugsweise ein kennzeichnungskräftiges und vorzugsweise maschinenunterstützt einlesbares Muster (1).

## Claims

1. Method for applying a captive identifier (1) to a workpiece (6) by modifying at least the surface of the workpiece (6), wherein a pulsed laser beam engraves a pattern onto the surface of the workpiece (6), at least one value characterizing the quality of the engraving is automatically determined, and at least one parameter of the laser processing as a function of the determined quality is automatically modified, in order to keep the characterizing value essentially constant, **characterized in that** the laser is operated in pulsed mode with an output power between 10% and 60% of the maximum power, and **in that** at least one of the parameters of power and pulse duration is regulated, in real time, as a function of the determined quality of the engraving.

2. Method according to claim 1, **characterized in that** the laser power is at least 200 W - preferably, 400 W to 1,200 W - and the pulse width is between 200 µs and 1,000 µs.

3. Method according to claim 1 or 2, **characterized in that** a preferably two-dimensional array code is applied as a distinctive pattern (1), wherein, if applicable, each matrix point (2) of the array code is constructed from multiple grid points (2a), and the laser beam is directed along the lines in a first dimension, alternately in opposite directions and preferably with constant velocity, and the distance between two successive lines traveling in opposite directions preferably corresponds to half of the measurement of the pattern (1), but to at least double the line pitch.

4. Method according to one of claims 1 through 3, **characterized in that** the retroreflection intensity, the process light, the contrast, the colour, or the like, for example, is determined as a characteristic value.

5. Method according to one of claims 1 through 4, **characterized in that** a specific parameter set for the laser machine (5) is selected from a database depending upon the material of the work piece (6) and is loaded into the controller (9) of the laser machine (5) for the labeling of the work piece (6).

6. Method for processing a workpiece (6) by means of a laser beam - preferably, for laser cutting of the workpiece (6), but in any event followed by additional processing steps, e.g., the bending of the workpiece (6) - **characterized in that** a captive identifier (1) is applied to the workpiece (6) by modifying at least the surface of the workpiece (6) corresponding to the features of claims 1 through 5, at the latest before the first additional processing step after the processing of the workpiece (6) by means of the laser beam.

7. Method according to claim 6, **characterized in that** the identifier (1) is created such that it contains a portion that characterizes at least one parameter of a processing step following the laser processing.

8. Method according to claim 7, **characterized in that** a machine-readable identifier (1) coding for a specific bending process is applied and preferably read in a machine-assisted manner, whereupon, as a function of the identifier (1), a specific bending process is executed.

9. Method according to claim 8, **characterized in that** the processing plan of the processing by means of the laser beam contains a sub-section for the application of the identifier (1).

10. Laser processing system, with a laser processing unit (3), at least for the modification of at least the surface of the workpiece (6) - in particular, for application of a captive identifier (1) to a workpiece (6) - and with a control unit (9) for the laser processing unit (5) for power and movement control of a preferably pulsed laser beam, at least for the engraving of a pattern (1) onto the surface of the workpiece (6); and with an arrangement (13) for determination of a value characterizing the quality of the engraving, **characterized in that** the control unit (9) is designed so as to reduce the output power for the engraving of the pattern (1) to 10% to 60% of the maximum power, and to regulate at least one of the parameters of power and pulse duration in real time such that the characterizing value remains essentially constant.

11. System according to claim 10, **characterized in that** the control unit (9) is designed so as to reduce the output power to at least 200 W - preferably, 400 W to 1,200 W - and to set the pulse width to between 200 µs and 1,000 µs.

12. System according to claim 10 or 11, **characterized in that** the control unit (9) is designed for movement control of the laser beam, at least for the application of the identifier (1), such that a preferably two-dimensional array code is applied as a distinctive pattern, wherein, if applicable, each matrix point (2) of the array code is constructed from multiple grid points (2a), and the laser beam is directed along the lines in a first dimension, alternately in opposite directions and preferably with constant velocity, and the distance between two successive lines traveling in opposite directions preferably corresponds to half of the dimension of the pattern (1), but to at least double the line pitch.

13. System according to one of claims 10 through 12, **characterized by** a database with specific, material-dependent parameter sets and an interface for loading a respective special parameter set into the control unit (9) of the laser machine (5).

14. System according to one of claims 10 through 13, **characterized by** at least one arrangement (13) for determining the retroreflection intensity, the process light, the contrast, the colour, or the like during the application of the pattern (1) and generating a value characterizing the quality of the engraving for feedback to the control device (9) of the laser machine (5).

15. System according to one of claims 10 through 14, **characterized by** a unit that generates or calls up a distinctive pattern (1) which characterizes at least one parameter of a system (11) for additional processing of the workpiece (6) after the laser processing - preferably, a distinctive pattern (1) that can preferably be read with machine-assistance.

## Revendications

1. Procédé d'application d'un marquage imperdable (1) sur une pièce à usiner (6) par modification d'au moins de la surface de la pièce à usiner (6), un rayon laser pulsé gravant un motif dans la surface de la pièce à usiner (6), au moins une valeur caractérisant la qualité de la gravure étant déterminée automatiquement, et au moins un paramètre de l'usinage laser étant modifié en fonction de la qualité déterminée, afin de maintenir la valeur caractérisante à peu près constante, **caractérisé en ce que** le laser est actionné de manière pulsée avec une puissance de sortie comprise entre 10 % et 60 % de la puissance maximale **et en ce qu'**au moins un des paramètres de puissance et de durée d'impulsion est réglé en temps réel en fonction de la qualité déterminée de la gravure.

2. Procédé selon la revendication 1, **caractérisé en ce que** la puissance du laser est d'au moins 200 W, de préférence de 400 W à 1200 W, et la largeur d'impulsion est comprise entre 200 µs et 1000 µs.

3. Procédé selon la revendication 1 ou 2, **caractérisé en ce que,** en guise de motif distinctif (1), un code de réseau de préférence bidimensionnel est appliqué, si bien que, le cas échéant, chaque point matriciel (2) du code de réseau est constitué de plusieurs points de trame (2a) et le rayon laser est guidé le long des lignes dans une première dimension de manière alternée en sens opposé, et de préférence à une vitesse constante, et la distance entre deux lignes qui se suivent et qui se croisent en sens opposé correspond de préférence à la moitié de la dimension du motif (1), mais au moins au double de la distance entre les lignes.

4. Procédé selon une des revendications 1 à 3, **caractérisé en ce que**, en guise de valeur caractéristique, par exemple, l'intensité de rétro-réflexion, la lumière de processus, le contraste, la couleur ou analogue, est déterminé(e).

5. Procédé selon une des revendications 1 à 4, **caractérisé en ce qu**'un jeu de paramètres spécifique pour la machine laser (5) est choisi dans une base de données en fonction du matériau de la pièce à usiner (6) et chargé pour le marquage de la pièce à usiner (6) dans la commande (9) de la machine laser (5).

6. Procédé d'usinage d'une pièce à usiner (6) au moyen d'un rayon laser, de préférence pour la découpe au laser de la pièce à usiner (6), le cas échéant suivi par d'autres étapes de traitement telles que le cintrage de la pièce à usiner (6), **caractérisé en ce que,** au plus tard avant la première étape de traitement ultérieure après l'usinage de la pièce à usiner (6) au moyen du rayon laser, un marquage imperdable (1) est appliqué sur la pièce à usiner (6) par modification d'au moins la surface de la pièce à usiner (6) de façon correspondante aux caractéristiques des revendications 1 à 5.

7. Procédé selon la revendication 6, **caractérisé en ce que** le marquage (1) est produit de manière à contenir une part qui caractérise au moins un paramètre d'une étape de traitement qui suit l'usinage au laser.

8. Procédé selon la revendication 7, **caractérisé en ce qu**'un marquage (1) lisible par machine codant un processus de cintrage déterminé est appliqué, et de préférence lu avec l'assistance de la machine, après quoi, en fonction du marquage (1), un processus de cintrage déterminé est appliqué.

9. Procédé selon la revendication 8, **caractérisé en ce que** le plan d'usinage de l'usinage au moyen du rayon laser contient une section partielle pour l'application du marquage (1).

10. Installation d'usinage au laser avec une unité d'usinage au laser (3), au moins pour la modification d'au moins la surface de la pièce à usiner (6), en particulier pour l'application d'un marquage imperdable (1) sur une pièce à usiner (6) et avec une unité de commande (9) pour l'unité d'usinage au laser (5) pour la commande de la puissance et du mouvement d'un rayon laser de préférence pulsé au moins pour la gravure d'un motif (1) dans la surface de la pièce à usiner (6), ainsi qu'avec un dispositif (13) destiné à déterminer une valeur caractérisant la qualité de la gravure, **caractérisée en ce que** l'unité de commande (9) est conçue de manière à réduire la puissance de sortie pour la gravure du motif (1) à entre 10 % et 60 % de la puissance maximale, et à régler au moins un des paramètres de puissance et de durée d'impulsion en temps réel de manière à ce que la valeur caractérisante reste en grande partie constante.

11. Installation selon la revendication 10, **caractérisée en ce que** l'unité de commande (9) est conçue pour réduire la puissance de sortie à au moins 200 W, de préférence entre 400 W à 1200 W, et régler la largeur d'impulsion entre 200 µs et 1000 µs.

12. Installation selon la revendication 10 ou 11, **caractérisée en ce que** l'unité de commande (9) est conçue pour la commande du mouvement du rayon laser au moins pour l'application du marquage (1), de sorte que, en guise de motif distinctif, un code de réseau de préférence bidimensionnel est appliqué, le cas échéant, chaque point de matrice (2) du code en réseau étant constitué de plusieurs points de trame (2a) et le rayon laser étant guidé le long des lignes dans une première dimension, de manière alternée en sens opposé, et de préférence à une vitesse constante, et la distance entre deux lignes qui se suivent et qui se croisent en sens opposé correspondant de préférence à la moitié de la dimension du motif (1), mais au moins le double de la distance entre les lignes.

13. Installation selon une des revendications 10 à 12, **caractérisé par** une base de données contenant des jeux de paramètres spécifiques en fonction du matériau et une interface pour le chargement respectif d'un jeu de paramètres spécial dans l'unité de commande (9) de la machine laser (5).

14. Installation selon une des revendications 10 à 13, **caractérisée par** au moins un dispositif (13) destiné à déterminer l'intensité de rétro-réflexion, la lumière de traitement, le contraste, la couleur ou des valeurs analogues pendant l'application du motif (1) et générer une valeur caractérisant la qualité de la gravure pour la renvoyer vers le dispositif de commande (9) de la machine laser (5).

15. Installation selon une des revendications 10 à 14, **caractérisée par** une unité, qui génère ou affiche un motif distinctif (1) qui caractérise au moins un paramètre pour une installation (11) pour le traitement ultérieur de la pièce à usiner (6) après l'usinage au laser, de préférence un motif (1) distinctif et de préférence lisible avec l'assistance de la machine.
